(19) Europäisches Patentamt
European Patent Office
Office européen des brevets

(11) Veröffentlichungsnummer: **0 067 926**
**B1**

(12) # EUROPÄISCHE PATENTSCHRIFT

(45) Veröffentlichungstag der Patentschrift: **12.06.85**

(51) Int. Cl.⁴: **H 01 M 4/50**

(21) Anmeldenummer: **82101897.5**

(22) Anmeldetag: **10.03.82**

(54) **Mangandioxidelektrode für Lithium-Batterien.**

(30) Priorität: **11.06.81 DE 3123100**

(43) Veröffentlichungstag der Anmeldung: **29.12.82 Patentblatt 82/52**

(45) Bekanntmachung des Hinweises auf die Patenterteilung: **12.06.85 Patentblatt 85/24**

(84) Benannte Vertragsstaaten: **DE FR GB IT NL**

(56) Entgegenhaltungen:
**DE - A - 2 835 976**
**DE - A - 2 835 977**

**HELVETICA CHIMICA ACTA, Band 52, Teil 8, Nr. 233, 1969, Seiten 2333-2346 R. GIOVANOLI et al.: "Über die Oxydation von Manganoxidhydroxid"**
**ELECTROCHEMICAL TECHNOLOGY, Band 5, Nr. 11-12, November/Dezember 1967, Seiten 535-542 A. KOZAWA et al.: "Cathodic reduction of beta-Mn02 and gamma-Mn02 in NH4Cl and KOH electrolytes"**
**CHEMICAL ABSTRACTS, Band 88, Nr. 22, 29. Mai 1978, Seite 189, Nr. 155724e, Columbus, Ohio, USA**

(73) Patentinhaber: **VARTA Batterie Aktiengesellschaft, Am Leineufer 51, D-3000 Hannover 21 (DE)**

(72) Erfinder: **Kruger, Franz Josef, Dr., Feuerbachstrasse 27, D-6200 Wiesbaden (DE)**

(74) Vertreter: **Kaiser, Dieter Ralf, Dipl.-Ing., Gundelhardtstrasse 72, D-6233 Kelkheim/Ts. (DE)**

EP 0 067 926 B1

Anmerkung: Innerhalb von neun Monaten nach der Bekanntmachung des Hinweises auf die Erteilung des europäischen Patents im Europäischen Patentblatt kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist (Art. 99(1) Europäisches Patentübereinkommen).

**Beschreibung**

Die Erfindung betrifft eine gepresste positive Mangandioxidelektrode für galvanische Elemente mit negativer Lithiumelektrode.

Aus Arbeiten von Ikeda et. al. (Manganese Dioxide as Cathodes for Lithium Batteries, Manganese Dioxide Symposium Volume 1, Cleveland 1975) ist die Verwendung von $MnO_2$ als positives Elektrodenmaterial in Lithiumbatterien und allgemein in Zellen mit nichtwässrigen Elektrolyten bereits bekannt.

Von den verschiedenen Modifikationen des Braunsteins ist die natürlich vorkommende $\beta$-Modifikation (Pyrolusit) am besten kristallisiert. Sie besitzt Rutilstruktur, während die Gitter der anderen Modifikationen sich durch bestimmte Deformationen, bedingt durch den Einbau von Fremdionen und Wasser, daraus ableiten.

Alle $MnO_2$-Modifikationen besitzen ferner Gitterfehlstellen, die sich von einem gewissen Sauerstoffunterschuss herleiten. Die Anzahl der Gitterfehlstellen nimmt mit der Deformation des Gitters zu, und in der gleichen Richtung steigt die chemische und elektrochemische Reaktionsfähigkeit und damit die Batterieaktivität.

In diesem Sinne ist der wasserhaltige Kunst- oder Elektrolytbraunstein mit der $\gamma$-Struktur, die auch dem natürlich vorkommenden Ramsdellit zugrundeliegt, besonders aktiv. Die Verwendung des Mangandioxids als positives Elektrodenmaterial in Zellen mit nichtwässrigen Elektrolyten macht allerdings dessen gründliche Entwässerung notwendig. Mit der Entwässerung ist gemäss dem Schema

$$\gamma\text{-}MnO_2 \xrightarrow{150 - 300°C} \gamma\text{-}MnO_2 +$$

$$+ \beta\text{-}MnO_2 \xrightarrow{300 - 450°C} \beta\text{-}MnO_2$$

zugleich eine Phasenumwandlung verbunden, wobei im ersten Schritt vornehmlich die anhaftende Feuchtigkeit ausgetrieben wird, während in dem angegebenen höheren Temperaturbereich auch das chemisch gebundene Konstitutionswasser verschwindet.

Dem durch Temperaturbehandlung bei Temperaturen von 350 bis 430°C aus $\gamma$-$MnO_2$ gewonnenen $\beta$-$MnO_2$ wird nun in der US-A-4 133 856 eine Kathodenausnutzbarkeit zugeschrieben, welche diejenige der Ausgangssubstanz weit übertrifft. Besonders günstige Ergebnisse werden bei 1- bis 2stündigem Erhitzen auf ca. 380°C erzielt.

Im Interesse einer guten Stromausbeute bei Li-Primärzellen mit positiven $MnO_2$-Elektroden liegt der Anmeldung die Aufgabe zugrunde, eine gepresste Mangandioxidelektrode anzugeben, deren elektrochemische Ausnutzbarkeit auf einem hochaktiven $MnO_2$ beruht, welches unter möglichst geringem Aufwand hergestellt werden kann.

Die Aufgabe wird erfindungsgemäss dadurch gelöst, dass das aktive Elektrodenmaterial ein durch oxidierendes Tempern von $\alpha$-MnO (OH) erzeugtes $\gamma$-$MnO_2$ ist.

Eine solche Elektrode ist das Produkt eines ebenfalls erfindungsgemässen Verfahrens, bei dem $\alpha$-MnO (OH) durch Wärmebehandlung im Sauerstoffstrom zu $\gamma$-$MnO_2$ aufoxidiert wird, das Oxidationsprodukt mit 5 bis 10 Gew.-% Graphit und 1 bis 4 Gew.-% Polytetrafluoräthylen vermischt wird und die Mischung durch Pressen in die Elektrodenform gebracht wird.

Zunächst gewinnt man das Ausgangsmaterial $\alpha$-MnO (OH) nach einer präparativen Methode von H. Bode, A. Schmier und D. Berndt (Z. Elektrochemie 66, 1962, S. 586 - 593) aus Elektrolytbraunstein ($\gamma$-$MnO_2$) durch Reduktion mit wässriger Hydrazinhydratlösung bei 70°C. Das erhaltene $\alpha$-MnO (OH) wird bei 100°C getrocknet und anschliessend gemäss

$$\alpha\text{-MnO (OH)} \xrightarrow[6 - 8\,h]{O_2,\ 270 - 290°C} \gamma\text{-}MnO_2$$

innerhalb 6 bis 8 Stunden zu dem erfindungsgemässen $\gamma$-$MnO_2$ reoxidiert. Vorzugsweise erhitzt man auf 280°C.

Dieses Produkt, welches nach Ausweis seiner Röntgenstrukturdaten dem natürlich vorkommenden Ramsdellit sehr nahe steht, hat eine analytische Zusammensetzung entsprechend etwa $MnO_{1,95}$. Als Zwischenprodukt bei der Reoxidation des $\alpha$-MnO (OH) bildet sich die Verbindung $Mn_5O_8$, die isolierbar ist, wenn man von feinkristallinem $\alpha$-MnO (OH) ausgeht. Dieses Material besitzt nahezu die doppelte spezifische Oberfläche (ca. 30 $m^2/g$) wie das $\alpha$-MnO (OH) in der gewöhnlichen Form (15 - 20 $m^2/g$).

Die überraschende Qualität des erfindungsgemäss hergestellten $\gamma$-$MnO_2$ hinsichtlich seiner Masseausnutzbarkeit erwies sich bei Entladeversuchen mit Li/$MnO_2$-Knopfzellen, bei denen auch gewöhnlicher Elektrolytbraunstein, bei 200°C getrocknet, und $\beta$-$MnO_2$ aus $\gamma$-$MnO_2$, bei 380°C hergestellt, als positives Elektrodenmaterial zum Vergleich eingesetzt waren.

Die Knopfzellen besassen die Abmessungen Ø 11,6 mm × 5,4 mm.

Zur Herstellung der Mangandioxidelektroden wurden die verschiedenen Braunsteine

A: $\gamma$-$MnO_2$, elektrolytisch, bei 200°C getrocknet;

B: $\beta$-$MnO_2$, nach US-A-4 133 856, aus $\gamma$-$MnO_2$ bei 380°C hergestellt;

C: $\gamma$-$MnO_2$ aus $\alpha$-MnO (OH), erfindungsgemäss jeweils mit 5 bis 10 Gew.-% Graphit und 1 bis 4 Gew.-% Polytetrafluoräthylenpulver innig vermischt und die Mischungen zu Tabletten verpresst. Die Braunsteinmengen in den Tabletten waren dabei so bemessen, dass die theoretische Elektrodenkapazität stets 99 mAh betrug.

Als Zellelektrolyt wurde eine 1 molare Lösung von $LiClO_4$ in einem Gemisch aus 70 Vol.-% Propylencarbonat und 30 Vol.-% Dimethoxiäthan verwendet.

Bei den praktischen Entladeversuchen unter einer Strombelastung von 0,5 $mA/cm^2$ wurden die nachfolgend zusammengestellten Zahlenwerte ermittelt:

| $MnO_2$-Sorte | Kapazität [mAh] bis 2 V Endspannung | Kathodenausnutzung [%] |
|---|---|---|
| A | 60 | 61 |
| B | 72 | 73 |
| C (erfindungsgemäss) | 85 | 86 |

Figur 1 zeigt ergänzend hierzu die Entladecharakteristiken der ausgewählten $MnO_2$-Sorten.

In dem Diagramm ist für jede $MnO_2$-Sorte der Zellspannungsverlauf U [V] gegen die Entladezeit t [h] aufgetragen. Weiterhin sind verschiedene Entladezeiten (45 h, 105 h, ...) mit der bis dahin erzielten Kathodenausnutzung $Q/Q_{th} \times 100$ [%] in Beziehung gesetzt, wobei $Q$ = entnommene Kapazität, $Q_{th}$ = theoretisch entnehmbare Kapazität.

Figur 1 macht die höhere spezifische Stromausbeute bei der erfindungsgemässen $MnO_2$-Sorte C im Vergleich zu den $MnO_2$-Sorten A und B besonders augenfällig.

## Patentansprüche

1. Gepresste positive Mangandioxidelektrode für galvanische Elemente mit negativer Lithiumelektrode, dadurch gekennzeichnet, dass das aktive Elektrodenmaterial ein durch oxidierendes Tempern von $\alpha$-MnO (OH) erzeugtes $\gamma$-$MnO_2$ ist.

2. Positive Mangandioxidelektrode nach Anspruch 1, dadurch gekennzeichnet, dass dem aktiven Elektrodenmaterial 5 bis 10 Gew.-% Graphit beigemischt ist.

3. Positive Mangandioxidelektrode nach den Ansprüchen 1 und 2, dadurch gekennzeichnet, dass dem aktiven Elektrodenmaterial 1 bis 4 Gew.-% Polytetrafluoräthylen beigemischt ist.

4. Verfahren zur Herstellung einer positiven Mangandioxidelektrode nach den Ansprüche 1 bis 3, dadurch gekennzeichnet, dass das aktive Elektrodenmaterial durch Wärmebehandlung von $\alpha$-MnO (OH) im Sauerstoffstrom bei Temperaturen von 270 bis 290°C zu $\gamma$-$MnO_2$ aufoxidiert wird, dass das Oxidationsprodukt mit 5 bis 10 Gew.-% Graphit und 1 bis 4 Gew.-% Polytetrafluoräthylenpulver vermischt wird, und dass die Mischung durch Pressen in die Elektrodenform gebracht wird.

5. Verfahren nach Anspruch 4, dadurch gekennzeichnet, dass die Temperatur während der oxidierenden Wärmebehandlung 280°C beträgt.

## Claims

1. Pressed positive manganese dioxide electrode for galvanic cells with a negative lithium electrode, characterised in that the active electrode material is a $\gamma$-$MnO_2$ produced by oxidative tempering of $\alpha$--MnO(OH).

2. Positive manganese dioxide electrode according to claim 1, characterised in that 5 to 10% by wt. graphite is mixed with the active electrode material.

3. Positive manganese dioxide electrode according to claims 1 and 2, characterised in that 1 to 4% by wt. polytetrafluoroethylene is mixed with the active electrode material.

4. Method for producing a positive manganese dioxide electrode according to claims 1 to 3, characterised in that the active electrode material is oxidised to $\gamma$-$MnO_2$ by heat treatment of $\alpha$-MnO(OH) in a stream of oxygen at temperatures of 270 to 290°C, that the oxidation product is mixed with 5 to 10% by wt. of graphite and 1 to 4% by wt. polytetrafluoroethylene, and that the mixture is brought into the electrode shape by pressing.

5. Method according to claim 4, characterised in that the temperature during the oxidative heat treatment is 280°C.

## Revendications

1. Electrode positive pressée au dioxyde de manganèse pour éléments galvaniques avec une électrode négative de lithium, électrode positive caractérisée en ce que le matériau actif de cette électrode est un $MnO_2$ $\gamma$ obtenu par recuit oxydant de MnO (OH) $\alpha$.

2. Electrode positive au dioxyde de manganèse selon la revendication 1, caractérisée en ce que le matériau actif de cette électrode est mélangé à 5 à 10% en poids de graphite.

3. Electrode positive au dioxyde de manganèse selon les revendications 1 et 2, caractérisée en ce que le matériau actif de cette électrode est mélangé à 1 à 4% en poids de polytétrafluoréthylène.

4. Procédé pour la réalisation d'une électrode positive au dioxyde de manganèse selon les revendications 1 à 3, caractérisé en ce que le matériau actif de cette électrode est oxydé en $MnO_2$ $\gamma$ par traitement thermique de MnO (OH) $\alpha$ dans un courant d'oxygène à des températures de 270 à 290°C, le produit de cette oxydation étant mélangé avec 5 à 10% en poids de graphite et 1 à 4% en poids de poudre de polytétrafluoréthylène, et le mélange étant mis sous forme d'électrode par pressage.

5. Procédé selon la revendication 4, caractérisé en ce que la température pendant le traitement thermique oxydant est de 280°C.

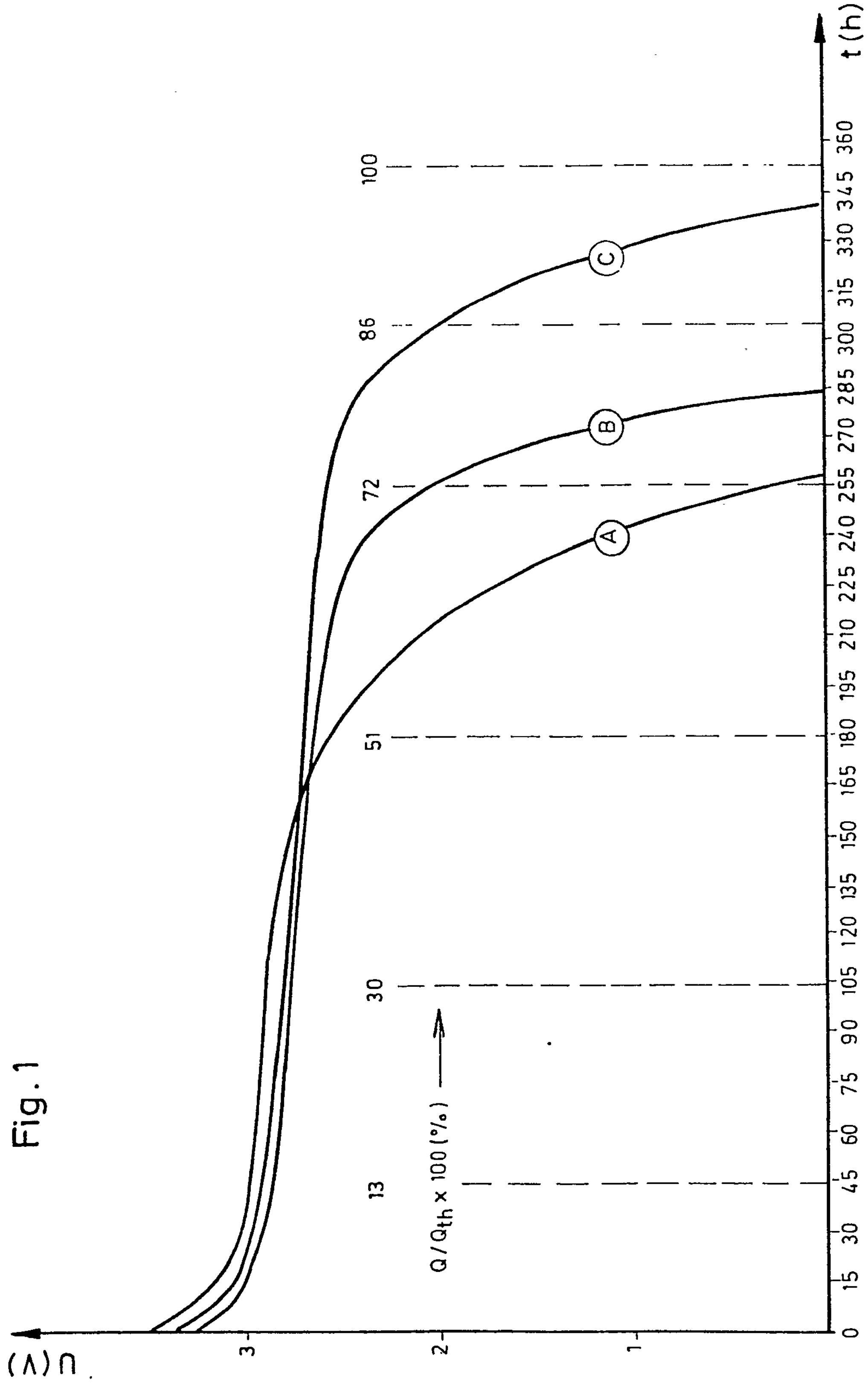
U (V)
3
2
1
0
15
30
45
60
75
90
105
120
135
150
165
180
195
210
225
240
255
270
285
300
315
330
345
360
t (h)
13
30
51
72
86
100
Q/Qth x 100 (%)
A
B
C

Fig. 1